# EUROPÄISCHE PATENTSCHRIFT

(11) **EP 1 118 784 B1**
(45) Veröffentlichungstag und Bekanntmachung des Hinweises auf die Patenterteilung: **11.08.2004**
(21) Anmeldenummer: 00128341.5
(22) Anmeldetag: 22.12.2000
(51) Int. Cl.: F16C 33/66

(54) **Vorrichtung zur Versorgung der Lager einer vertikalen Welle**
Device for supplying the bearings of a vertical shaft
Dispositif d'alimentation des paliers d'un axe vertical

(30) Priorität: 20.01.2000 DE 10002101
(43) Veröffentlichungstag der Anmeldung: 25.07.2001
(73) Patentinhaber: A. Friedr. Flender AG, 46395 Bocholt (DE)
(72) Erfinder: Bühs, Hubert, 46399 Bocholt (DE)
(74) Vertreter: Radünz, Ingo, Dipl.-Ing.

(56) Entgegenhaltungen:
- WO-A-99/08886
- DE-A- 4 041 389
- DE-B- 1 163 161
- FR-A- 2 229 885
- US-A- 5 236 380
- US-A- 5 810 116

## Beschreibung

Die Erfindung betrifft eine Vorrichtung zur Versorgung der Lager einer in einem Gehäuse vertikal angeordneten Welle mit den Merkmalen des Oberbegriffes des Anspruches 1.

Bei Getrieben mit vertikal angeordneten Wellen ist die Ölversorgung der oben liegenden Wälzlager problematisch. Das Problem kann dadurch, daß gelöst werden, indem der Ölstand soweit erhöht wird, daß die oben liegenden Lager in das Öl eintauchen. Diese Lösung kann nur bei kleinen Getrieben mit einer geringen Leistungsdichte ausgeführt werden, da der erhöhte Ölstand zu einer starken Wärmeentwicklung führt. Hierdurch bedingt ist noch ein Ölausgleichsbehälter erforderlich.

Eine weitere Möglichkeit ist die Anordnung einer Ölpumpe, die entweder von einer Getriebewelle oder einem separaten Elektromotor angetrieben wird. Weiterhin ist ein System zur Versorgung der Lager einer vertikal angeordneten Welle mit im Umlauf geführtem Öl bekannt (DE-U 295 05 182), bei dem die vertikale Welle von einem zentralen Ölförderkanal durchdrungen ist. In dem zentralen Ölförderkanal ist ein mit der Welle sich drehender Steg angeordnet, der als Ölförderelement wirkt.

Der Erfindung liegt die Aufgabe zugrunde, die gattungsgemäße Vorrichtung zu vereinfachen und auf zusätzliche rotierende Teile zur Förderung des Schmieröls zu den Lagern zu verzichten.

Diese Aufgabe wird bei einer gattungsgemäßen Vorrichtung erfindungsgemäß durch die kennzeichnenden Merkmale des Anspruches 1 gelöst. Vorteilhafte Ausgestaltungen der Erfindung sind Gegenstand der Unteransprüche.

Das als Halbschale ausgebildete Förderelement ist ein einfaches Konstruktionsteil, das stationär in dem Getriebegehäuse untergebracht werden kann. Die Getriebewelle brauchen zur Schmierölversorgung der Lager nicht mit Innenbohrungen versehen zu werden. Das erfindungsgemäße Förderelement nutzt die Haftung einer Flüssigkeit an einer festen Fläche sowie die innere Reibung in einer Flüssigkeit aus. Das Öl hat an der Oberfläche des umlaufenden Maschinenteils die gleiche Geschwindigkeit wie dieses und nimmt mit zunehmenden Abstand ab. Das Öl wird dadurch durch das stationäre Förderelement in die ebenfalls stationäre Ölförderleitung geführt und gelangt von dort aus zu den oberhalb des Ölsumpfes liegenden Lagern der vertikalen Welle.

Mehrere Ausführungsbeispiele der Erfindung sind in der Zeichnung dargestellt und werden im folgenden näher erläutert. Es zeigen:
- Fig. 1: den Längsschnitt durch ein Getriebe,
- Fig. 2: den Längsschnitt durch ein Getriebe gemäß einer anderen Ausführungsform,
- Fig. 3: die Einzelheit Z nach Fig. 1
- Fig. 4: die Draufsicht auf Fig. 3
- Fig. 5: die Einzelheit Z nach Fig. 1 gemäß einer anderen Ausführungsform und
- Fig. 6: die Draufsicht auf Fig. 5

Das dargestellte Getriebe enthält eine vertikale Welle 1, die innerhalb eines Getriebegehäuses 2 in zwei Lagern 3, 4 gelagert ist. In dem unteren Teil des Getriebegehäuses 2 befindet sich ein Ölsumpf 5. Das untere Lager 3 ist in den Ölsumpf 5 eingetaucht, während sich das obere Lager 4 oberhalb des Ölsumpfes 5 befindet. Im Bereich des Durchtrittes der Welle 1 ist das Getriebegehäuse 2 durch einen Deckel 6 abgeschlossen. Die Welle 1 trägt ein Zahnrad 7 oder ein Zahnritzel 8, die umlaufende Maschinenteile darstellen. Außer der gezeigten Welle 1 umfaßt das Getriebe weitere nicht gezeigte, Zahnräder oder Zahnritzel tragende Wellen.

Durch den Innenraum des Getriebegehäuses 2 ist eine Ölförderleitung 9 zu dem oberen, sich oberhalb des Ölsumpfes 5 befindlichen Lager 4 geführt. Die Ölförderleitung 9 reicht in den Ölsumpf 5 hinein und steht mit einer Längsbohrung 10 und einer Querbohrung 11 in Verbindung. Diese Bohrungen sind so in der Wandung des Getriebegehäuses 2 angebracht, daß die Querbohrung 11 in einem Ringraum 12 oberhalb des oberen Lagers 4 endet.

An dem unteren, sich innerhalb des Ölsumpfes 5 befindlichen Ende der Ölförderleitung 9 ist ein stationäres Förderelement 13 befestigt. Dieses Förderelement 13 besteht aus einer Halbschale 14 mit einem geschlossenen Boden 15, einem Rand 16 und einer Öffnung 17. Die Ölförderleitung 9 ist zusammen mit dem Förderelement 13 über einen Steg 18 an dem Getriebegehäuse 2 befestigt.

An einem Ende der Halbschale 14 ist der Boden 15 von einer Durchtrittsöffnung 19 durchdrungen, in die die Ölförderleitung 9 einmündet. An dem der Durchtrittsöffnung 19 abgewandten Ende ist in dem Rand 16 der Halbschale 14 eine Einströmöffnung 20 angebracht.

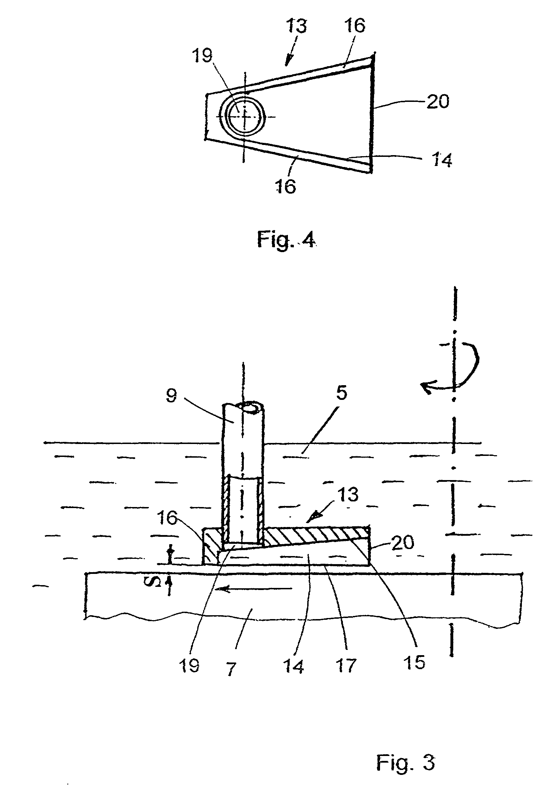

Ausgehend von der Einströmöffnung 20 verjüngt sich der Innenraum der Halbschale 14 zu der Durchtrittsöffnung 19 hin. Wie in Fig. 4 gezeigt ist, ist die Halbschale 14 trichter- oder trapezförmig ausgebildet, wobei die längere der beiden parallelen Seiten des Trapezes die Einströmöffnung 20 bildet. Ebenso wie in der Breite verjüngt sich auch die Halbschale 14 in der Höhe. Gemäß der Fig. 3 erfolgt diese Verjüngung dadurch, daß die Dicke des Bodens 15 von der Einströmöffnung 20 in Richtung auf die Durchtrittsöffnung 19 zunimmt, wodurch sich die Höhe des Innenraumes verringert.

Die Öffnung 17 der Halbschale 14 ist dem umlaufenden Maschinenteil zugewandt und steht diesem in einem geringen Abstand S gegenüber. Der Abstand S beträgt vorzugsweise 0 bis 0,1 mm und soll einerseits möglichst gering sein, andererseits aber auch so groß, daß keine Kollision mit dem umlaufenden Maschinenteil besteht.

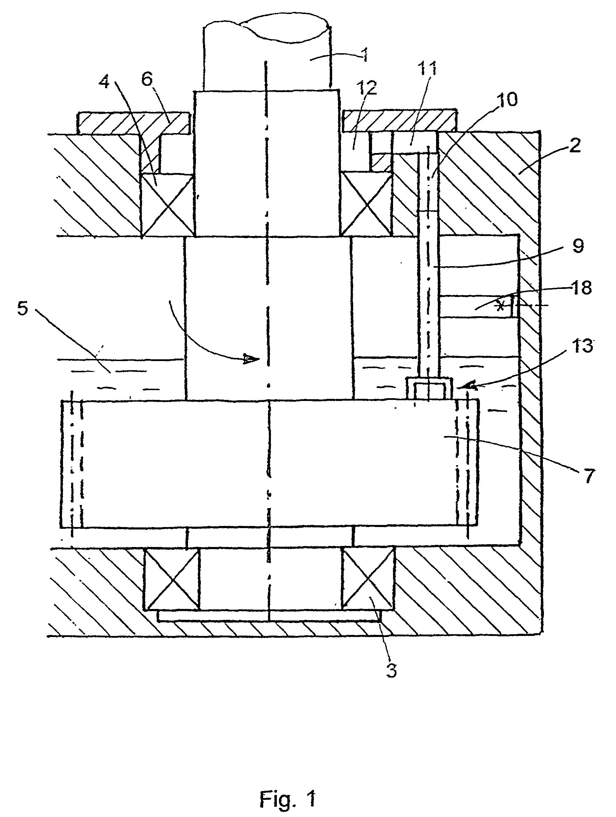

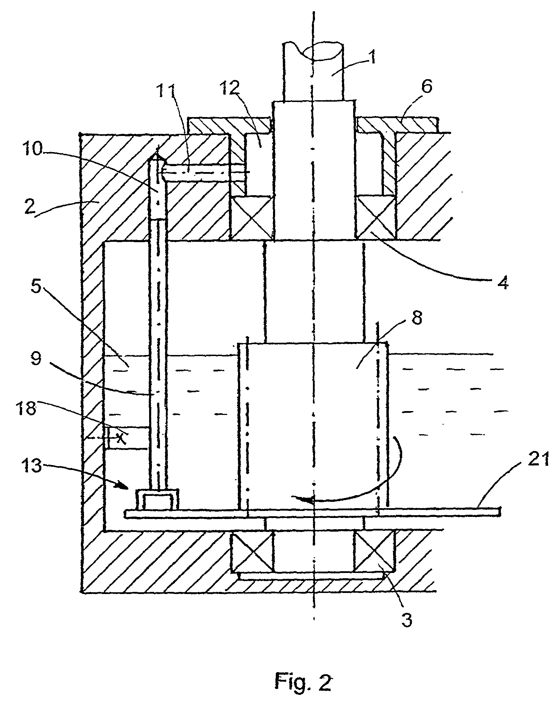

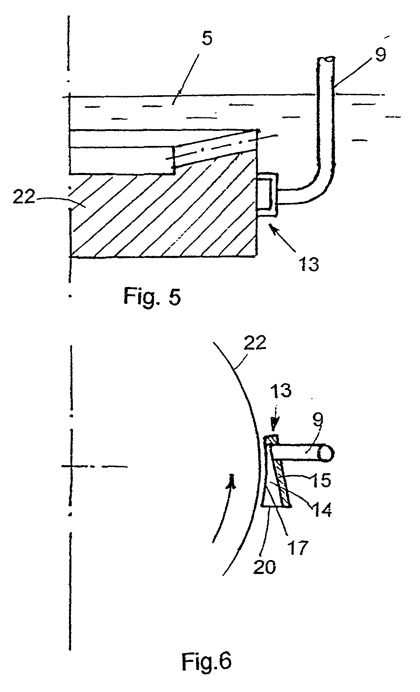

Gemäß Fig. 1 steht die Halbschale 14 des Förderelementes 13 einer Stirnseite des Zahnrades 7 gegenüber. An dem in Fig. 2 gezeigten Zahnritzel 8 ist eine zylindrische Scheibe 21 befestigt, deren Durchmesser größer als der Durchmesser des Zahnritzels 8. Dabei steht das Förderelement 13 dieser Scheibe 21 an deren äußerem Rand gegenüber. In diesen Fällen ist die Öffnung 17 der Halbschale 14 durch eine ebene Fläche gegeben. Gemäß den Fig. 5 und 6 besteht das umlaufende Maschinenteil aus einem Kronenrad 22. In diesem Fall steht das Förderelement 13 der zylindrischen Mantelfläche des Kronenrades 22 gegenüber. Die Öffnung 17 des Halbschale 14 des hierzu verwendeten Förderelementes 13 liegt auf einer konkav gewölbten Fläche.

Bedingt durch die Neigung einer Flüssigkeit, an einer festen Fläche zu haften, sowie bedingt durch die innere Reibung in einer Flüssigkeit nimmt das Öl innerhalb des Ölsumpfes 5 an der Oberfläche des umlaufenden Maschinenteils die gleiche Geschwindigkeit wie das Maschinenteil (Zahnrad 7, Scheibe 21, Kronenrad 22) an. Da die durch das umlaufende Maschinenteil dem Öl erteilte Geschwindigkeit mit dem Abstand von dem Maschinenteil abnimmt, wird das Förderelement 13 möglichst nahe an dem umlaufenden Maschinenteil angebracht. Das in Bewegung versetzte Öl tritt in den Innenraum der Halbschale 14 des Förderelementes 13 durch die Einströmöffnung 20 ein, die in die Richtung weist, die der Drehrichtung des Maschinenteiles entgegengesetzt ist. Aufgrund der Verengung des Innenraumes der Halbschale 14 des Förderelementes 13 wird der Druck am Ende der Halbschale 14, dort wo sich die Durchtrittsöffnung 19 befindet, stetig erhöht. Mit diesem erhöhten Druck tritt das Öl in die Ölförderleitung 9 ein und wird zu dem oberen Lager 4 geführt. Die Fördermenge und damit auch der Druck sind abhängig von der Geschwindigkeit des umlaufenden Maschinenteiles sowie der Viskosität der Flüssigkeit.

## Patentansprüche

1. Vorrichtung zur Versorgung der Lager (4) einer in einem Gehäuse (2) vertikal angeordneten Welle (1) über eine vertikale Ölförderleitung (9), die in einen im unteren Teil des Gehäuses (2) vorhandenen Ölsumpf (5) hineinreicht und die mit einem Förderelement (13) in Verbindung steht, **dadurch gekennzeichnet, daß** die Ölförderleitung (9) durch den Innenraum des Gehäuses (2) geführt und mit einer das Förderelement (13) bildenden Halbschale (14) verbunden ist, daß die Öffnung (17) der Halbschale (14) in einem geringen Abstand einem in dem Gehäuse (2) umlaufenden Maschinenteil gegenübersteht, daß der Rand (16) der Halbschale (14) an einer Seite mit einer Einströmöffnung (20) versehen ist und daß der der Öffnung (17) gegenüberliegende Boden (15) der Halbschale (14) an der der Einströmöffnung (20) gegenüberliegenden Seite mit einer Durchtrittsöffnung (19) versehen ist, die mit der Ölförderleitung (9) verbunden ist.

2. Vorrichtung nach Anspruch 1, **dadurch gekennzeichnet, daß** der Innenraum der Halbschale (14) des Förderelementes (13) ausgehend von der Einströmöffnung (20) sich bis zu der mit der Ölförderleitung (9) in Verbindung stehenden Durchtrittsöffnung (19) verjüngt.

3. Vorrichtung nach Anspruch 2, **dadurch gekennzeichnet, daß** sich der Innenraum der Halbschale (14) in der Höhe verjüngt.

4. Vorrichtung nach Anspruch 2 oder 3, **dadurch gekennzeichnet, daß** die Halbschale (14) trichterförmig ausgebildet ist und daß sich der Innenraum der Halbschale (14) in der Breite verjüngt.

5. Vorrichtung nach einem der Ansprüche 1 bis 4, **dadurch gekennzeichnet, daß** das Förderelement (13) der Stirnseite des umlaufenden Maschinenteiles gegenübersteht.

6. Vorrichtung nach einem der Ansprüche 1 bis 4, **dadurch gekennzeichnet, daß** das Förderelement (13) der zylindrischen Mantelfläche des umlaufenden Maschinenteiles gegenübersteht.

7. Vorrichtung nach einem der Ansprüche 1 bis 6, **dadurch gekennzeichnet, daß** an dem umlaufenden Maschinenteil eine Scheibe (21) von größerem Durchmesser befestigt ist und daß das Förderelement (13) der Scheibe (21) an deren äußeren Rand gegenübersteht.

8. Vorrichtung nach einem der Ansprüche 1 bis 7, **dadurch gekennzeichnet, daß** das Förderelement (13) über die Ölförderleitung (9) mit dem Gehäuse (2) verbunden ist.

9. Vorrichtung nach einem der Ansprüche 1 bis 8, **dadurch gekennzeichnet, daß** die Einströmöffnung (20) in die Richtung weist, die der Drehrichtung des Maschinenteiles entgegengesetzt ist.

## Claims

1. Device for supply to the bearing (4) of a shaft (1), which is vertically arranged in a housing (2), by way of vertical oil conveying duct (9) which reaches into an oil sump (5) present in the lower part of the housing (2) and which is connected with a conveying element (13), **characterised in that** the oil conveying duct (9) is led through the interior space of the housing (2) and connected with a half shell (14) forming the conveying element (13), that the opening (17) of the half shell (14) is disposed at a small spacing opposite a machine part rotating in the housing (2), that the edge (16) of the half shell (14) is provided at one side with an inflow opening (20) and that the base (15), which is opposite the opening (17), of the half shell (14) is provided with a passage opening (19), which is connected with the oil conveying duct (9), at the side opposite the inflow opening (20).

2. Device according to claim 1, **characterised in that** the interior space of the half shell (14) of the conveying element (13) tapers as far as to the passage opening (19), which is connected with the oil conveying duct (9) going out from the inflow opening (20).

3. Device according to claim 2, **characterised in that** the interior space of the half shell (14) narrows in height.

4. Device according to claim 2 or 3, **characterised in that** the half shell (14) is formed to be funnel-shaped and that the interior space of the half shell (14) narrows in width.

5. Device according one of claims 1 to 4, **characterised in that** the conveying element (13) is disposed opposite the end face of the rotating machine part.

6. Device according to one of claims 1 to 4, **characterised in that** the conveying element (13) is disposed opposite the cylindrical circumferential surface of the rotating machine part.

7. Device according to one of claims 1 to 6, **characterised in that** a disc (21) of greater diameter is fastened to the rotating machine part and that the conveying element (13) is disposed opposite the disc (21) at the outer edge thereof.

8. Device according to one of claims 1 to 7, **characterised in that** the conveying element (13) is connected with the housing (2) by way of the oil conveying duct (9).

9. Device according to one of claims 1 to 8, **characterised in that** the inflow opening (20) faces in the direction which is opposite the direction of rotation of the machine part.

## Revendications

1. Dispositif pour l'alimentation des paliers (4) d'un arbre (1) disposé verticalement dans un carter (2), par l'intermédiaire d'une conduite de refoulement d'huile verticale (9) qui pénètre dans un bac à huile (5) situé dans la partie inférieure du carter (2) et est en liaison avec un élément de refoulement (13), **caractérisé en ce que** la conduite de refoulement (9) est amenée au travers de l'espace intérieur du carter (2) et est raccordée à une demi-coquille (14) formant l'élément de refoulement (13), que l'ouverture (17) de la demi-coquille (14) est en vis-à-vis à une faible distance d'une partie de machine en rotation dans le carter (2), que le bord (16) de la demi-coquille (14) est muni sur un côté d'une ouverture d'afflux (20) et que le fond (15) de la demi-coquille (14) opposé à l'ouverture (17) est muni sur le côté opposé à l'ouverture d'afflux (20) d'une ouverture de passage (19) qui est raccordée à la conduite de refoulement d'huile (9).

2. Dispositif suivant la revendication 1, **caractérisé en ce que** l'espace intérieur de la demi-coquille (14) de l'élément de refoulement (13) se rétrécit à partir de l'ouverture d'afflux (20) jusqu'à l'ouverture de passage (19) raccordée à la conduite de refoulement d'huile (9).

3. Dispositif suivant la revendication 2, **caractérisé en ce que** l'espace intérieur de la demi-coquille (14) se rétrécit en hauteur.

4. Dispositif suivant l'une des revendications 2 et 3, **caractérisé en ce que** la demi-coquille (14) est configurée en forme d'entonnoir et que l'espace intérieur de la demi-coquille (14) se rétrécit en largeur.

5. Dispositif suivant l'une des revendications 1 à 4, **caractérisé en ce que** l'élément de refoulement (13) est en vis-à-vis du côté frontal de la partie de machine en rotation.

6. Dispositif suivant l'une des revendications 1 à 4, **caractérisé en ce que** l'élément de refoulement (13) est en vis-à-vis de la surface d'enveloppe cylindrique de la partie de machine en rotation.

7. Dispositif suivant l'une des revendications 1 à 6, **caractérisé en ce qu'**un disque (21) de plus grand diamètre est fixé sur la partie de machine en rotation et que l'élément de refoulement (13) est en vis-à-vis du disque (21) sur le bord extérieur de ce dernier.

8. Dispositif suivant l'une des revendications 1 à 7, **caractérisé en ce que** l'élément de refoulement (13) est raccordé au carter (2) par l'intermédiaire de la conduite de refoulement d'huile (9).

9. Dispositif suivant l'une des revendications 1 à 8, **caractérisé en ce que** l'ouverture d'afflux (20) est dirigée dans le sens opposé au sens de rotation de la partie de machine.
